Europäisches Patentamt

European Patent Office

Office européen des brevets

(19)

(11) Veröffentlichungsnummer: **0 006 139**
**B1**

(12)

# EUROPÄISCHE PATENTSCHRIFT

(45) Veröffentlichungstag der Patentschrift:
04.11.81

(21) Anmeldenummer: 79101548.0

(22) Anmeldetag: 22.05.79

(51) Int. Cl.³: **F 16 B 23/00,** B 21 K 1/46

(54) **Zur Aufnahme einer Abdeckkappe geeignete Kreuzschlitz-Schraube und Verfahren zu ihrer Herstellung.**

(30) Priorität: 20.06.78 DE 2826933

(43) Veröffentlichungstag der Anmeldung:
09.01.80 Patentblatt 80/1

(45) Bekanntmachung des Hinweises auf die Patenterteilung:
04.11.81 Patentblatt 81/44

(84) Benannte Vertragsstaaten:
AT BE CH FR GB NL SE

(56) Entgegenhaltungen:
DE-A-1 575 287
DE-B-1 179 769
GB-A-1 162 701
GB-A-1 526 225
US-A-2 592 482
US-A-3 134 290
US-A-3 234 982

(73) Patentinhaber: Gerhard, Anton, Illesheimer Strasse 10,
D-8500 Nürnberg (DE)

(72) Erfinder: Gerhard, Anton, Illesheimer Strasse 10,
D-8500 Nürnberg (DE)

(74) Vertreter: Rau, Manfred, Dr. Dipl.-Ing.,
Postfach 91 04 80 Lange Zeile 30,
D-8500 Nürnberg 91 (DE)

EP 0 006 139 B1

BUNDESDRUCKEREI BERLIN

Zur Aufnahme einer Abdeckkappe geeignete Kreuzschlitz-Schraube und Verfahren zu ihrer Herstellung

Die Erfindung betrifft eine Kreuzschlitz-Schraube, die zur Aufnahme einer Abdeckkappe geeignet ist, mit vier axialsymmetrisch von der Schraubenkopf-Oberfläche ausgehenden und mit ihren radial begrenzenden Flanken auf der Mantelfläche eines umgekehrten Kegelstumpfes liegenden Einzelschlitzen, an die sich eine koaxiale stumpfkegelige Vertiefung anschließt, wobei die beiden Seitenwandungen jedes Einzelschlitzes parallel zueinander verlaufen und zwischen jeweils peripher einander benachbarten Einzelschlitzen radiale Ausprägungen vorgesehen sind, sowie ein Verfahren zur Herstellung einer solchen Kreuzschlitz-Schraube unter Verwendung eines speziellen Kaltfließpreß-Umformstempels und eine besonders vorteilhafte Abdeckkappe.

Die PHILLIPS-Kreuzschlitzschraube, die in das deutsche Normenwerk (DIN 965/966 und DIN 7962, insbesondere Blatt 1 und Blatt 2) Eingang gefunden hat, hat sich aufgrund ihrer besonderen Eignung, mittels kraftgetriebener Schraubendreher erhebliche Drehmomente einzubringen, schon seit längerem im Maschinen- und Apparatebau durchgesetzt. In jüngerer Zeit finden Kreuzschlitzschrauben zunehmend auch im Bauwesen und auf dem Sektor der Möbelherstellung Anwendung, nachdem es durch gezielte Maßnahmen der Lieferanten möglich war, das psychologische Hemmnis zu überwinden, daß der Handwerker nun anstelle seines einfachen Schneiden-Schraubendrehers wenigstens einen Kreuzschlitz-Schraubendreher verfügbar haben muß.

Eine in Hinblick auf die Möglichkeiten der Massenfertigung im Kalt-Fließpreßverfahren spürbare Verbesserung erfuhr die Ausgestaltung des Kreuzschlitzes im Schraubenkopf durch zwischen den einander peripher benachbarten Einzelschlitzen vorgenommene zusätzliche Prägemaßnahmen zur Verhinderung eines das einbringbare Drehmoment beschränkenden Materialabfalles im Bereiche der oberen Kanten der seitlichen Berandung der Einzelschlitze (DE-A-1 179 769). Die entsprechenden Maßnahmen bestehen in unterschiedlichen Gestaltungen und Überlagerungen von V-förmigen oder kerbenartigen Einprägungen im Bereiche der Winkelhalbierenden zwischen den Mittellängsebenen je zweier einander peripher benachbarter Einzelschlitze. Dabei ist stets eine mehr oder weniger scharfkantige und linear ausgebildete Talsohle vorgesehen, die vom Außenbereich der Oberfläche des Schraubenkopfes in Richtung auf die Achse des Schraubenkopfes hin abfallend verläuft, und zwar mit einer Neigung, die im Bereich der Neigung der Flanke der Einzelschlitze liegt oder einen noch stumpferen Winkel mit der Achse der Schraube einschließt.

Die Begrenzung des Materialbereiches zwischen zwei einander peripher benachbarten Seitenwandungen einander benachbarter Ein-zelschlitze in Richtung auf das Zentrum des Schraubenkopfes hin ist bei den genormten Kreuzschlitz-Ausbildungen prismatisch ausgebildet, mit wenigstens einer in Richtung auf das Zentrum des Schraubenkopfes vorspringenden Kante. Dabei sind sowohl diese Kante als auch die beiderseits angrenzenden Flächen gegenüber der Längsachse der Schraube und damit des Schraubenkopfes geneigt; und zwar im Regelfalle unter Einschluß eines Winkels mit dieser Achse, der zwischen dem Winkelwert für die seitliche oder Flanken-Begrenzung der Einzelschlitze und demjenigen Winkelwert liegt, den die Talsohle der zusätzlichen, zur Oberfläche des Schraubenkopfes auslaufenden V-ähnlichen Ausprägungen für die Materialstützung beim Kaltfließpressen aufweisen.

Es gibt aber auch Vorschläge für die Ausgestaltung von Kreuzschlitzschrauben, bei denen die Begrenzung des Materials zwischen peripher einander benachbarten Einzelschlitzen nicht in der beschriebenen Weise mit einer zum Zentrum des Schraubenkopfes hin vorspringenden und gegen die Achse geneigten Kante ausgebildet ist. Vielmehr ist hier die Materialbegrenzung konvex, kreisbogenförmig zum Zentrum des Schraubenkopfes hin vorgewölbt, ausgebildet, mit bogenförmigem Übergang in die jeweils benachbarte Seitenwandung des Einzelschlitzes und mit U-ähnlicher, schräg zum äußeren Bereich der Oberfläche des Schraubenkopfes hin auslaufender Tal-Profilierung, bei erst im oberflächennäheren Bereiche einsetzender Kerbausprägung zur Materialstützung gegen Materialabfallerscheinungen.

Jedenfalls kann gesagt werden, daß das Problem des Materialabfalles durch Ausprägungen in der schräg zur Schraubenachse verlaufenden Materialbegrenzung zwischen einander peripher benachbarten Einzelschlitzen als gelöst gelten kann.

Jüngere Bemühungen um Weiterbildung der Ausgestaltung, von Kreuzschlitzschrauben befassen sich mit dem Problem, die Tendenz zum Herausheben der Flügel eines Schraubendrehers beim Aufbringen des Drehmomentes zu verringern. Die Lösung wird darin gesehen, unter Beibehaltung der beschriebenen Geometrie der Materialbegrenzung zwischen einander benachbarten Einzelschlitzen, den Winkel zu verkleinern, der zwischen der flankenförmigen, stirnseitigen Berandung jeden Schlitzes und der Längsachse der Schraube eingeschlossen wird.

Ein besonderes fertigungstechnisches Problem tritt auf, wenn auf dem Schraubenkopf zu dessen optischer Verdeckung eine Abdeckkappe anbringbar sein soll, die üblicherweise mittels eines stiftförmigen Ansatzes in eine koaxiale hohlzylindrische Ausnehmung unterhalb der eigentlichen Kreuzschlitz-Ausbildung einzusetzen ist. Denn diese relativ tief gelegene und im Verhältnis zum Durchmesser vergleichsweise lange hohlzylindrische Ausnehmung läßt sich aufgrund der geometrischen Gegebenheiten nicht im Zuge der Kreuzschlitz-Kopfausbildung mit einpressen, weil der entsprechend erforderliche, lange Stempel-Dorn im Material der Schraube festklemmen und vom Stempel abreißen bzw. den gepreßten Schraubenkopf nicht freigeben würde. Trotz des ganz erheblichen Mehraufwandes an Zeit und Kosten ist es deshalb üblich, die im Kaltfließpressen hergestellte Schraube anschließend, nach Umspannen auf ein gesondertes Werkzeug, spanend mit einer Bohrung zu versehen. Dabei ist auch diese Maßnahme fertigungstechnisch kritisch, weil einerseits das Ansetzen eines Bohrers zwischen der Profilierung des Kreuzschlitzes sehr exakt erfolgen muß, um ein Verlaufen oder einen Bruch zu verhindern, und weil andererseits gerade im Bereiche der Achse der Schraube die größte Materialverdichtung beim Kaltfließpressen wirksam wurde, also der spanenden Bearbeitung der größte Widerstand entgegengesetzt wird. Um solchen, der preisgünstigen Massenfertigung überaus abträglichen Problemen auszuweichen, ist es aus dem DE-U-7 417 348 schon bekannt, die Abdeckkappe nicht mit einem stiftförmigen Ansatz, sondern mit einem hohlzylindrischen Ansatz zu versehen. Dessen axiale Länge ist im Verhältnis zum Außendurchmesser der Zylinderwandung klein ausgebildet. Dieser Ansatz wird in eine entsprechend bemessene, flache zylindrische Vertiefung in der Oberfläche des Schraubenkopfes eingedrückt, wo er dann sicher verankert ist. Eine solche im Verhältnis zum Durchmesser flache zylindrische Vertiefung läßt sich ohne weiteres im einstufigen Doppeldruck-Fließpreßverfahren, im Zuge der Kreuzschlitzausbildung, also ohne Umspannerfordernisse und Werkzeuggefährdung, in den Schraubenkopf einprägen.

Diese Ausbildung der Abdeckkappen-Befestigung hat sich in der Praxis bereits hervorragend bewährt. Allerdings greift bei nicht rechtwinklig in ein Werkstück eingesetzter Schraube der hohlzylindrische Ansatz der Abdeckkappe nicht ringsum gleichförmig tief in die zylindrische Vertiefung in der Schraubenkopf-Oberfläche ein. Wenn dann gerade in dem Bereiche der Peripherie der Abdeckkappe, in dem die Verankerung des Ansatzes nicht so tief in der zylindrischen Ausnehmung in der Oberfläche des Schraubenkopfes erfolgte, aufgrund ungünstiger Betriebsgegebenheiten ein Werkzeug unter den Rand der Abdeckkappe geschoben wird, kann es vorkommen, daß die Abdeckkappe in diesem Bereiche von der Oberfläche des Werkstückes abgehoben oder ganz aus dem Schraubenkopf herausgekippt wird.

Die der Erfindung zugrundeliegende Aufgabenstellung beruht vorwiegend auf der Erkenntnis, daß trotz weitgehend abgeschlossen erscheinender Entwicklung hinsichtlich der geometrischen Ausgestaltung von Kreuzschlitzschraubenköpfen noch eine für die Massenfertigung spürbare Verbesserung dadurch erzielbar sein müßte, daß eine weniger komplizierte geometrische Form gewählt wird, die einen entsprechend einfacher herstellbaren und leichter reproduzierbaren Stempel als Preß-Werkzeug bedingt. Zugleich liegt der Erfindung aber die Aufgabe zugrunde, eine auch anwendungsorientiert verbesserte Kreuzschlitzschraube zu schaffen, mit einer einfach einsetzbaren und sicher haltenden Abdeckkappe.

Diese Gesamtaufgabe wird erfindungsgemäß bei einer Kreuzschlitzschraube gattungsgemäßer Art im wesentlichen dadurch gelöst, daß die Ausprägungen zur Achse der Schraube parallele Mantelflächen von Zylinderabschnitten sind, deren Zylinderachsen auf der Winkelhalbierenden zwischen je zwei einander peripher benachbarten Einzelschlitzen radial aus der Schrauben-Achse nach außen heraus versetzt sind und deren jeweils die seitliche Begrenzung ergebende Erzeugende durch eine scharfe Kante gegeben ist, die zugleich eine achsparallele Begrenzung der angrenzenden Seitenwandung in Richtung auf die Schrauben-Achse bildet.

Überraschenderweise hat sich gezeigt, daß trotz der umfassenden Entwicklungsarbeiten, die in die Gestaltung von Kreuzschlitzschrauben bereits eingebracht wurden und zu einem befriedigenden Ergebnis geführt zu haben schienen, diese geometrisch sehr viel einfachere Ausbildung des Kreuzschlitzes nicht nur ebenfalls jegliche Gefahr eines Materialabfalles im Bereiche der oberen Schlitz-Begrenzungen unterbindet, sondern darüber hinaus auch noch das Aufbringen spürbar größerer Drehmomente ohne Verformungsgefahr der seitlichen Schlitz-Berandungen — im Vergleich zu den herkömmlichen Schlitz-Geometrien — erlaubt und vor allem auch ohne irgendwelche zusätzlichen fertigungstechnischen Maßnahmen unmittelbar zu einem Kreuzschlitz-Schraubenkopf führt, in den direkt der stiftförmige Ansatz einer Abdeckkappe einsetzbar und fest verankerbar ist.

Diese verschiedenen und für die Praxis maßgeblichen Vorteile, die überraschenderweise mit der vereinfachten Kreuzschlitz-Geometrie nach der vorliegenden Erfindung gleichzeitig erzielt werden, beruhen, soweit erkennbar, darauf, daß die zylinderwandungsförmige Ausprägung zwischen je zwei einander peripher benachbarten Einzelschlitzen mit ihrem scharfkantigen Übergang in die angrenzende Seitenwandung des jeweiligen Einzelschlitzes eine hervorragende Materialabstützung nicht nur während des Kaltfließpressens, also zur Vermeidung der Gefahr von Materialabfall, hervorbringt, sondern darüber hinaus aufgrund des vollwandigen Materialbereiches zwischen einander benachbarten Einzelschlitzen auch eine hervorragende periphere Abstützung beim Einbringen des Drehmomentes mittels der Flügel eines Schraubendrehers über die gesamte Eingriffshöhe erbringt. Dabei ist von anwendungsorientierter Bedeutung, daß die beiden marktgängigen Schraubendreher-Typen für Kreuzschlitzschrauben gleicherweise vorteilhaft bei der erfindungsgemäßen Kreuzschlitzgeometrie anwendbar sind. Zugleich stellt die ausgekehlte, achsparallele Begrenzung des Materials zwischen aneinander peripher benachbarten Einzelschlitzen einen hervorragenden Sitz für die Aufnahme des stiftförmigen Ansatzes bei herkömmlichen Abdeckkappen dar, indem die in Richtung auf das Zentrum des Schraubenkopfes vorstehenden scharfen Kanten, an denen die Seitenwandungen der Einzelschlitze beginnen, sich geringfügig in das elastische Kunststoff-Material eindrücken können und dabei dieses Material in die hohlkehlenförmigen Ausprägungen drücken, wo es vollflächig und somit gut kraftschlüssig radial angedrückt ist.

Die Erfindung betrifft zugleich eine zweckmäßige Ausgestaltung des Überganges vom stiftförmigen Ansatz zum kappenförmigen Teil der Abdeckkappe und ein Verfahren zur preisgünstigen Massenherstellung der erfindungsgemäß ausgestalteten Kreuzschlitzschraube im Einstufen-Doppeldruck-Kaltfließpreßverfahren unter Verwendung eines Umform-Stempels, der entsprechend der vereinfachten Geometrie der Kreuzschlitzausbildung einfacher, also sowohl kostengünstiger als auch genauer reproduzierbar herstellbar ist und dadurch auch geringeren Verschleißerscheinungen unterworfen ist.

Es ist zu beachten, daß bei der Kaltfließpreß-Umformung im mathematischen Sinne exakt parallele Begrenzungen — beispielsweise exakt parallele Seitenwandungen eines Einzelschlitzes oder eine exakt achsparallele Zylinderabschnitt-Mantelfläche — nicht auftreten dürfen, weil dann die Gefahr besteht, daß das Umform-Werkzeug, also der Preß-Stempel, mit Abschluß des Preßvorgangs nicht mehr aus dem formgepreßten Gegenstand herausgezogen werden kann, weil die Flächenreibungen zu groß geworden sind. Wenn im Rahmen der Beschreibung der vorliegenden Erfindung vorstehend oder nachstehend von Parallelität die Rede ist, dann ist, wie in der Kaltfließpreß-Umformtechnik üblich, deshalb nicht die mathematisch exakte Parallelität gemeint, sondern nur Parallelität im Verhältnis zu den übrigen, gegen Bezugssysteme schräg verlaufenden Flächen. Zur Gewährleistung eines sicheren Lösens des Umform-Stempels aus dem Preßling wird in der Praxis eine Neigung der parallelen Seitenwandungen der Einzelschlitze bzw. der zylindermantelförmigen Ausprägungen gegeneinander in der Größenordnung von 30 Minuten gewählt.

Ferner sind im Rahmen der Beschreibung der vorliegenden Erfindung unter scharfkantigen Begrenzungen zwischen einander schneidenden Flächen keine messerscharfen Kanten zu verstehen, sondern kleine Übergangsradien oder Fasen, wie sie in der Kaltpreß-Umformtechnik üblich sind, um lokale Verschleißerscheinungen oder nicht reproduzierbare Formgebungen möglichst zu vermeiden.

Weitere Merkmale und Vorteile der Erfindung ergeben sich aus nachstehender Beschreibung eines bevorzugten Realisierungsbeispiels zur erfindungsgemäßen Lösung hinsichtlich der Kreuzschlitzausbildung und einer besonders zweckmäßigen Abdeckkappen-Gestaltung sowie eines Werkzeuges zum Ausüben des erfindungsgemäßen Verfahrens, wobei die Zeichnung die wesentlichen Einzelheiten im wesentlichen maßstäblich, allerdings vergrößert, wiedergibt. Es zeigt:

Fig. 1 die Ansicht eines Schraubenkopfes mit einem erfindungsgemäß ausgebildeten Kreuzschlitz in abgebrochener Darstellung,

Fig. 2 einen Längsschnitt durch die Schrauben-Achse entsprechend den Schnittpfeilen II-II in Fig. 1 mit oberhalb des Schraubenkopfes ebenfalls im Axialschnitt dargestellter bevorzugter Ausführungsform für eine Abdeckkappe,

Fig. 3 eine Stirnansicht eines Umform-Stempels für die Kaltfließpreß-Herstellung von Schraubenköpfen nach Fig. 1/Fig. 2 und

Fig. 4 eine Seitenansicht des Werkzeugs in Fig. 3.

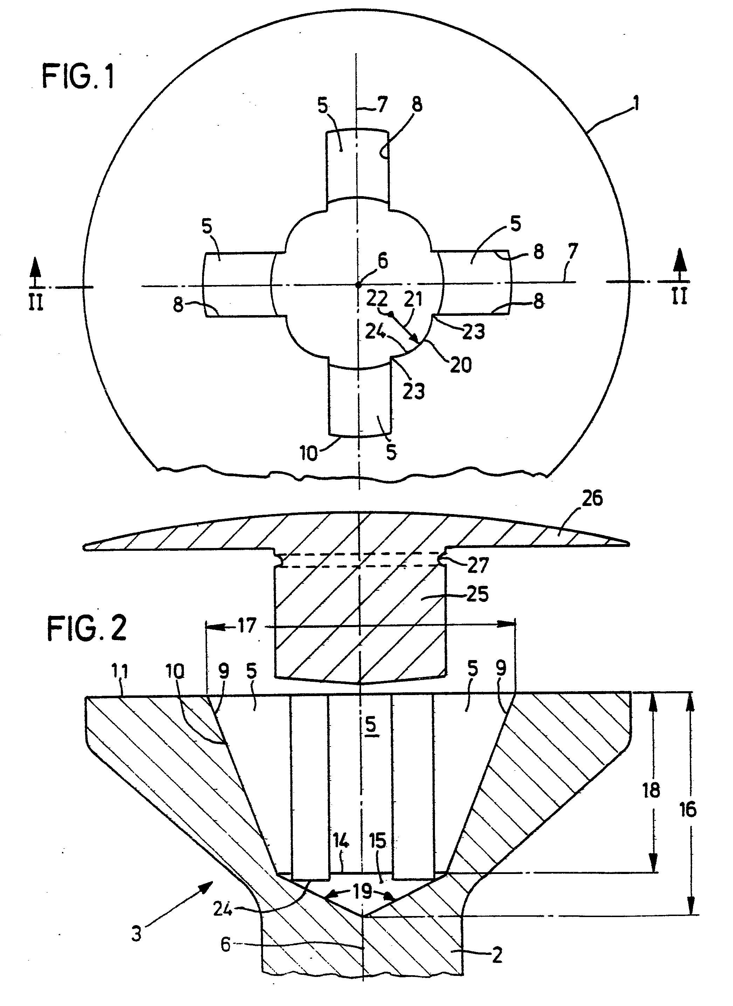

Bei der Ansicht gemäß Fig. 1 handelt es sich um den Blick auf einen Schraubenkopf 1, z. B. auf eine Flachkopfschraube, deren Kopf wie aus der Schnittdarstellung der Fig. 2 ersichtlich, im dargestellten Beispielsfalle als kegelstumpfförmiger Senkkopf ausgebildet ist.

Um auf den Schaft 2 der Schraube 3 ein Drehmoment ausüben zu können, ist der Schraubenkopf 1 mit einem Kreuzschlitz in Form von vier Einzelschlitzen 5 ausgestattet. Die Einzelschlitze 5 sind axialsymmetrisch bezüglich der Achse 6 der Schraube 3 angeordnet, mit der Maßgabe, daß ihre Mittellängsebenen 7 sich im Verlaufe der Achse 6 rechtwinklig kreuzen. Die Einzelschlitze 5 sind durch Seitenwandungen 8 begrenzt, die je Einzelschlitz 5 parallel zueinander, und parallel zur diesem Einzelschlitz 5 zugeordneten Mittellängensebene 7, verlaufen.

Die seitlichen Begrenzungen oder Flanken 9 der Einzelschlitze 5 liegen im dargestellten Beispielsfalle auf der Mantelfläche 10 eines umgekehrten, spitzwinkligen Kegelstumpfes, dessen Grundfläche mit der flachen Oberfläche 11 des Schraubenkopfes 1 zusammenfällt. Die Flanken 9 verlaufen also spitzwinklig — bevorzugt unter einem Flankenwinkel von 21° gegenüber der Achse 6 der Schraube 3 — von der Oberfläche 11 her in Richtung auf den Schrauben-Schaft 2 aufeinander zu. An die kleinere Grundfläche 14 schließt sich eine auf der Spitze stehende stumpfkegelige Vertiefung 15 an. Beispielsweise beträgt die Gesamttiefe 16 von der Oberfläche 11 bis zur Spitze der Vertiefung 15 bei einem Schraubenkopf 1 mit genormtem Kreuzschlitz-Außendurchmesser 17 von 7,2 mm etwa 5,3 mm, was einer Kegelstumpfhöhe 18 von 4,3 mm und einem Kegelwinkel 19 von etwa 128° entspricht, vgl. die Darstellung in Fig. 2. Ein Übergang auf andere, bevorzugt ebenfalls genormte Kreuzschlitz-Außendurchmesser 17 entsprechend stärkeren oder schwächeren Schrauben-Schäften 2 bedingt eine entsprechende Änderung dieser charakteristischen Abmessungen.

Zwischen zwei einander benachbarten Seitenwandungen 8 von peripher benachbarten Einzelschlitzen 5 ist eine von der Achse 6 des Schraubenkopfes 1 radial nach außen weisende Ausprägung 20 vorgesehen. Diese weist angenähert die Gestalt der Mantelfläche eines Zylinderabschnittes auf, der parallel zur Achse 6 ausgerichtet ist, aber einen kleineren Radius 21 als die Grundfläche 14 der stumpfkegeligen Vertiefung 15 aufweist. Die Achse 22 jedes dieser Zylinderabschnitte liegt auf einer Winkelhalbierenden zwischen zwei peripher einander benachbarten Mittellängsebenen 7 und aus dem Kreuzungspunkt dieser Mittellängsebenen 7, also aus der Achse 6 der Schrauben 3, um einen Betrag in Richtung auf die Schraubenkopf-Peripherie radial versetzt, der in der Größenordnung von 30% bis 50% des Radius der Grundfläche 14 der Vertiefung 15 ausmacht.

Die achsparallelen Erzeugenden, die eine Ausprägung 20 und damit eine Zylinderabschnitt-Mantelfläche seitlich begrenzen, gehen jeweils über eine zur Achse 6 parallel verlaufende scharfe Kante 23 in die benachbarte Seitenwandung 8 des angrenzenden Einzelschlitzes 5 über. Aus dem Radius 21 im Verhältnis zum größeren Radius der Grundfläche 14 der Vertiefung 15, an der die schräg zur Achse 6 hin verlaufenden Flanken 9 der Einzelschlitze 5 enden, ergibt sich also als untere Berandung der Ausprägungen 20 jeweils eine kreisbogenförmige Fase 24, die gegenüber der Grundfläche 14 der Vertiefung 15 in Richtung auf den Schrauben-Schaft 2 axial versetzt ist. Radius 21 und Achse 22 jedes dieser Zylinderabschnitte, deren Mantelflächen die Ausprägungen 20 ergeben, sind dabei jedoch so gewählt, daß deren Peripherie im Bereiche der Winkelhalbierenden zwischen peripher einander benachbarten Mittellängsebenen 7 einen Kreisbogen vom Durchmesser der Grundfläche 14 innen tangiert, so daß die Seitenwandungen 8 der Einzelschlitze 5, parallel zu den zugeordneten Mittellängsebenen 7 um den Betrag der vorspringenden Kante 23 in die Peripherie der Grundfläche 14 eindringend, zum Zentrum des Schraubenkopfes 1 hin verlängert sind.

Diese spezifische Ausbildung der zylindermantelförmigen Ausprägungen 20, die scharfkantig von den beiderseits benachbarten Einzelschlitzen 5 begrenzt sind, gewährleistet in überraschend hervorragender Weise, daß der sonst beim Kaltfließpressen derartiger Kreuzschlitzschrauben zu befürchtende Materialabfall im Bereiche der Oberkanten der Einzelschlitze 5, also im Bereiche der Oberfläche 11 des Schraubenkopfes 1, nicht auftritt.

Dabei ist besonders bemerkenswert, daß dieses Resultat gegenüber entsprechenden Ergebnissen mit Kreuzschlitz-Ausbildungen nach dem Stande der Technik mittels einer geometrisch sehr viel einfacheren Kreuzschlitzform erzielt wird.

Hinzu kommt, daß gegenüber herkömmlichen Kreuzschlitz-Ausgestaltungen mit gegenüber der Längsachse 6 der Schraube 3 geneigten Flächen der Ausprägungen 20 die nunmehr achsparallele, hohlzylindrische Innenmantelfläche der Ausprägung 20 im Zusammenwirken mit der scharfen Begrenzungs-Kante 23 ohne weitere spanende oder nicht-spanende Verformung des Schraubenkopfes 1 unmittelbar geeignet ist, den in Durchmesser und Länge entsprechend dimensionierten stiftförmigen Ansatz 25 einer herkömmlichen Abdeckkappe 26 aus wenigstens geringfügig elastischem Material überaus fest zu halten. Solche Abdeckkappen 26 weisen gewöhnlich einen Durchmesser auf, der geringfügig größer ist, als der Durchmesser der Oberfläche 11 des Schraubenkopfes 1 der Senkkopf-Schraube 3. Wenn dieser Schraubenkopf 1 in das Material eines mittels der Schraube 3 befestigten Gegenstandes eingesenkt wird, kann somit durch die Abdeckkappe 26 geeigneter Farbwahl in Hinblick auf die Umgebung der Befestigungsstelle der Schraubenkopf 1 vollständig bedeckt werden, was häufig aus ästhetischen Gründen erwünscht ist. Zugleich ist dadurch vermieden, daß Schmutzablagerungen im Bereiche der Einzelschlitze 5 der Kreuzschlitzschraube auftreten, die ggf. ein späteres Lösen der Schraube 3 behindern könnten, weil die Flügel der Spitze des entsprechenden Schraubendrehers nicht mehr sicher fassen.

Insbesondere im rauhen Massen-Montagebetrieb kann es in der Praxis durchaus vorkommen, daß eine Schraube 3 nicht rechtwinklig zur Oberfläche des befestigten Bauelementes angeordnet ist. Angesichts der relativ starren Verbindung zwischen dem stiftförmigen Ansatz 25 und dem Kappenteil der Abdeckkappe 26 kann es dann vorkommen, daß die Abdeckkappe 26 nur mit einem Teil der Peripherie bündig auf die Oberfläche des Bauelementes aufliegt, mit dem gegenüberliegenden Teil ihrer Peripherie dagegen von dieser Oberfläche absteht. Das kann aus ästhetischen Gründen unerwünscht sein, oder deshalb, weil durch unbeabsichtigtes Hintergreifen in diesem abstehenden Bereich eine axiale Zugkomponente auf den stiftförmigen Ansatz 25 der Abdeckkappe 26 ausgeübt wird, die zum Herausziehen aus dem Schraubenkopf 1 oder, aufgrund der festen Halterung zwischen den Ausprägungen 20 und den Kanten 23, zum Abreißen des kappenförmigen Teiles von dem Ansatz 25 führen kann.

Um solches zu vermeiden, ist es zweckmäßig, zwischen dem stiftförmigen Ansatz 25 und dem kappenförmigen Teil der Abdeckkappe 26 einen gelenkigen Teil vorzusehen, der im Ausführungsbeispiel nach Fig. 2 einfach durch eine Materialverjüngung in Form einer umlaufenden Nut 27 realisiert ist. Weil jetzt keine starre Verbindung zwischen dem stiftförmigen Ansatz 25 und dem kappenförmigen Teil der Abdeckkappe 26 mehr gegeben ist, legt letzterer sich auch bei nicht rechtwinklig zur Oberfläche des Bauteiles verlaufender Achse 6 der Schraube 3 ringsum gleichförmig gegen diese Oberfläche an, wenn durch axiale Druckausübung auf den Mittelbereich der Abdeckkappe 26 der stiftförmige Ansatz 25 in den achsparallel begrenzten Hohlraum zwischen den Ausprägungen 20 und Kanten 23 im Schraubenkopf 1 eingeführt ist.

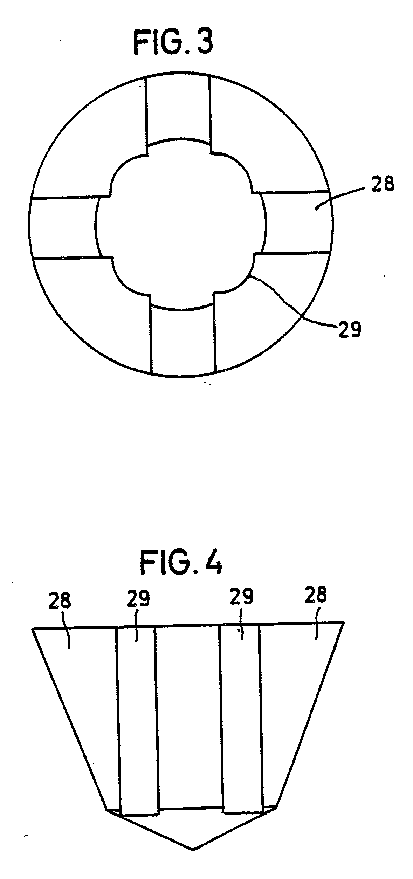

Fig. 3 zeigt eine Stirnansicht des vorderen Teiles des die Formausprägung ergebenden Stempels zum Herstellen eines Kreuzschlitz-Schraubenkopfes 1 nach Fig. 1 bzw. Fig. 2 auf einer einstufigen Doppeldruckpresse im Kaltfließpreßverfahren und Fig. 4 eine Seitenansicht. Die Einzelschlitze 5 (vgl. Fig. 1 oder Fig. 2) werden durch Flügel 28 und die Ausprägungen 20 durch aus der Achse des Werkzeuges radial versetzte Zylinderausschnitte 29 geprägt, die seitlich, längs einer Erzeugenden in scharfkantigem Übergang der Zylindermantelaußenfläche zur Seitenfläche des benachbarten Flügels 28 begrenzt sind.

Die Erfindung ist aber nicht auf die dargestellten und beschriebenen Ausführungsbeispiele beschränkt, sie umfaßt auch alle fachmännischen Abwandlungen sowie Teil- und Unterkombinationen der beschriebenen und/oder dargestellten Merkmale und Maßnahmen.

## Patentansprüche

1. Kreuzschlitz-Schraube (3), die zur Aufnahme einer Abdeckkappe (26) geeignet ist, mit vier axialsymmetrisch von der Schraubenkopf-Oberfläche (11) ausgehenden und mit ihren radial begrenzenden Flanken (9) auf der Mantelfläche eines umgekehrten Kegelstumpfes liegenden Einzelschlitzen (5), an die sich eine koaxiale stumpfkegelige Vertiefung (15) anschließt, wobei die beiden Seitenwandungen (8) jedes Einzelschlitzes (5) parallel zueinander verlaufen und zwischen jeweils peripher einander benachbarten Einzelschlitzen (5) radiale Ausprägungen (20) vorgesehen sind, dadurch gekennzeichnet, daß die Ausprägungen (20) zur Achse (6) der Schraube (3) parallele Mantelflächen von Zylinderabschnitten sind, deren Zylinderachsen auf der Winkelhalbierenden zwischen je zwei einander peripher benachbarten Einzelschlitzen (5) radial aus der Schrauben-Achse (6) nach außen heraus versetzt sind und deren jeweils die seitliche Begrenzung ergebende Erzeugende durch eine scharfe Kante (23) gegeben ist, die zugleich eine achsparallele Begrenzung der angrenzenden Seitenwandung (8) in Richtung auf die Schrauben-Achse (6) bildet.

2. Kreuzschlitz-Schraube nach Anspruch 1, dadurch gekennzeichnet, daß der Radius (21) der achsparallelen hohlzylindrischen Ausprägungen (20) etwa 70% bis 50% des Radius der Grundfläche (14) der stumpfkegeligen Vertiefung (15) ausmacht.

3. Kreuzschlitz-Schraube nach Anspruch 2, dadurch gekennzeichnet, daß die Achsen der hohlzylindrischen Ausprägungen (20) auf der Winkelhalbierenden zwischen den Mittellängsebenen (7) zweier jeweils einander peripher benachbarter Einzelschlitze (5) so weit aus der Schrauben-Achse (6) heraus verlegt sind, daß die Mantelflächen der Ausprägungen (20) einen Kreisbogen mit dem Radius der Grundfläche (14) der stumpfkegeligen Vertiefung (15) innen tangieren.

4. Kreuzschlitz-Schraube nach einem der vorangegangenen Ansprüche mit der Abdeckkappe, dadurch gekennzeichnet, daß die Abdeckkappe (26) einen stiftförmigen Ansatz (25) aufweist, der nach Länge und Durchmesser einem zwischen den Kanten (23) des Kreuzschlitzes einbeschreibbaren Zylinder mit geringem Durchmesser-Übermaß angepaßt ist und im Bereiche des Anschlusses an den kappenförmigen Teil der Abdeckkappe (26) gelenkig ausgebildet ist.

5. Verfahren zum Herstellen einer Kreuzschlitz-Schraube nach einem der Ansprüche 1 bis 3 im einstufigen Doppeldruck-Kaltfließpreßverfahren mittels eines Umform-Stempels, der vier axialsymmetrisch radial sich erstreckende Flügel (28) aufweist, deren Berandung auf der Mantelfläche eines Kegelstumpfes liegt, und der von dessen kleinerer Grundfläche an stumpfkegelig ausläuft, dadurch gekennzeichnet, daß ein Stempel benutzt wird, bei dem die Flügel (28) aus achsparallelen Seitenberandungen von Zylinderausschnitt-Mantelflächen (29) hervorragen, deren Zylinderachsen aus dem Schnittpunkt der Mittellängsebenen durch die Flügel und längs Winkelhalbierender zwischen diesen Mittellängsebenen radial nach außen versetzt sind.

## Claims

1. Phillips screw (3) which is suitable for receiving a cap (26) and has four individual slots (5) which extend axisymmetrically from the screw head surface (11) and lie with their radially limiting flanks (9) on the lateral surface area of an inverted truncated cone and which are followed by a coaxial truncated cone-shaped recess (15), the two side walls (8) of each individual slot (5) running parallel to one another and radial impressed sections (20) being provided between each pair of peripherally adjacent individual slots (5), characterised in that the impressed sections (20) are lateral areas of cylinder segments parallel to the axis (6) of the screw (3), the cylinder axes of which, on the angle bisector between each pair of peripherally adjacent individual slots (5), are staggered outwards radially from the screw axis (6) and of which the generating line, producing each lateral limitation, is formed by a sharp edge (23) which at the same time forms an axially parallel limitation of the adjacent side wall (8) in the direction of the screw axis (6).

2. Phillips screw according to Claim 1, characterised in that the radius (21) of the axially parallel hollow cylindrical impressed sections (20) is approximately 70% to 50% of the radius of the basal area (14) of the truncated cone-shaped recess (15).

3. Phillips screw according to Claim 2, characterised in that the axes of the hollow cylindrical impressed sections (20), on the angle bisector between the median longitudinal planes (7) of each pair of peripherally adjacent slots (5), are moved so far out of the screw axis (6) that the lateral surface areas of the impressed sections (20) are, on the inside, tangent to a circular arc having the radius of the basal area (14) of the truncated cone-shaped recess (15).

4. Phillips screw according to any one of the preceding Claims and having the cap, characterised in that the cap (26) has a pin- or peg-shaped extension (25) which is adapted in length and diameter to a cylinder having a slight diameter overdimension, which cylinder can be inscribed between the edges (23) of the cross slot, and is flexibly designed in the area connected to or adjacent to the cap-shaped part of the cap (26).

5. Method of manufacturing a Phillips screw according to any one of the Claims 1 to 3 in the single-stage dual pressure cold extrusion process using an extrusion die which comprises four axisymmetrically and radially extending wings (28), the edges of the said wings lying on the lateral face of a truncated cone, and which tapers from its smaller basal area in the form of a truncated cone, characterised in that a die is used in which the wings (28) project from axially parallel lateral edges of lateral faces (29) of cylinder segments, the cylinder axes of which are staggered radially outwards from the intersecting point of the median longitudinal planes through the wings and along angle bisectors between the said median longitudinal planes.

**Revendications**

1. Vis à empreinte cruciforme (3) se prêtant à recevoir un couvercle ou coiffe de protection (26), avec quatre rainures distinctes (5) partant, dans une disposition de symétrie axiale, de la surface (11) de la tête de la vis et se trouvant, par les flancs (9) qui les limitent radialement, sur la surface latérale d'un tronc de cône inversé à laquelle se raccorde un renfoncement (15) en forme de cône obtus coaxial, les deux parois latérales (8) de chacune des rainures (5) s'étendant parallèlement l'une à l'autre, et où sont prévues, chaque fois entre deux rainures (5) voisines l'une de l'autre en périphérie, des avancées radiales (20), caractérisée en ce que les avancées (20) sont des surfaces latérales parallèles à l'axe (6) de la vis (3), de segments de cylindres, les axes de ces cylindres étant décalés radialement vers l'extérieur par rapport à l'axe (6) de la vis, sur la bissectrice entre chaque fois deux rainures (5) voisines en périphérie et dont la génératrice donnant chaque fois la limitation latérale, est fournie par une arête aiguë (23) qui forme en même temps une limite, parallèle à l'axe, de la paroi latérale (8) qui s'y raccorde, en direction de l'axe (6) de la vis.

2. Vis à empreinte cruciforme suivant la revendication 1, caractérisée en ce que le rayon (21) des avancées en cylindres creux parallèles à l'axe, est à peu près de 70% à 50% du rayon de la surface de base (14) du renfoncement en forme de cône obtus (15).

3. Vis à empreinte cruciforme suivant la revendication 2, caractérisée en ce que les axes des avancées en cylindres creux (20) sont décalés vers l'extérieur par rapport à l'axe (6) de la vis sur les bissectrices entre les plans longitudinaux moyens (7) de deux rainures (5) voisines en périphérie l'une de l'autre, chaque fois, dans une mesure telle que les surfaces latérales des avancées (20) sont tangentes intérieurement à un arc de cercle ayant le rayon de la surface de base (14) du renfoncement (15) en forme de cône obtus.

4. Vis à empreinte cruciforme suivant l'une quelconque des revendications précédentes, avec une coiffe de protection, caractérisée en ce que la coiffe (26) présente un prolongement en forme de tige (25) qui est adapté suivant sa longueur et son diamètre, avec un léger excès de diamètre, à un cylindre inscriptible entre les arêtes (23) de l'empreinte cruciforme, et réalisé à articulation dans la région du raccordement à la partie en calotte de la coiffe de protection (26).

5. Procédé de fabrication d'une vis à empreinte cruciforme suivant l'une quelconque des revendications 1 à 3, en un processus de filage à froid sous double pression en une étape, à l'aide d'un poinçon changeur de forme qui présente quatre ailes (28) s'étendant radialement suivant une disposition de symétrie axiale, leur bordure se trouvant sur la surface latérale d'un tronc de cône et passant en cône abtus à sa plus petite surface de base, caractérisé en ce qu'on emploie un poinçon dans lequel les ailes (28) s'avancent en limitations latérales parallèles à l'axe de surfaces latérales (29) de segments de cylindres, les axes des cylindres étant décalés radialement vers l'extérieur, à partir du point d'intersection des plans longitudinaux médians avec les ailes, et le long des bissectrices entre ces plans longitudinaux médians.

FIG.1

FIG.2

# FIG. 3

28

29

# FIG. 4

28     29     29     28